# EUROPÄISCHE PATENTANMELDUNG

(11) **EP 1 206 962 A1**
(43) Veröffentlichungstag der Anmeldung: **22.05.2002**
(21) Anmeldenummer: 00811090.0
(22) Anmeldetag: 17.11.2000
(51) Int. Cl.: B01F 5/06, B01J 19/32

(54) **Statischer Mischer**

(71) Anmelder: Sulzer Chemtech AG, 8404 Winterthur (CH)
(72) Erfinder: Grütter, Thomas, 8635 Oberdürnten (CH); Heusser, Rolf, 8400 Winterthur (CH)
(74) Vertreter: Sulzer Management AG

(57) **Zusammenfassung**

Die Komponente (1) zu einem statischen Mischer (100) ist durch Schneiden und Umformen oder durch Stanzen aus einem ebenen Materialband (10) hergestellt. Sie erstreckt sich in einer durch das Materialband gegebenen Längsrichtung (11). Die Komponente weist folgende Gestalt auf:
Quer zur Längsrichtung (11) sind in Abständen transversale Segmente (2) angeordnet, die nach dem Umformen bzw. dem Stanzen in einer Zentralebene (12) der Komponente (1) liegen. Zwischen den transversalen Segmenten (2) liegen Streifenfelder (30), die einem durch das Schneiden bzw. das Stanzen hergestellten Linienmuster entsprechen und die aus longitudinalen, d.h. in der Längsrichtung sich erstreckenden Streifen (3) bestehen. Die transversalen Breiten der Streifen können variabel sein. Für jeden Streifen sind jeweils bezüglich dem zentralen Bereich (6) des Streifenfelds Halbstreifen (7, 8'; 8, 7') unterscheidbar. Durch das Umformen oder das Stanzen sind die Halbstreifen aus der Zentralebene (12) ausgebogen, wobei diese jeweils an Basislinien (32), die die transversalen Segmente begrenzen, eine Biegekante gegenüber den transversalen Segmenten (2) bilden.

## Beschreibung

Die Erfindung betrifft eine Komponente zu einem statischen Mischer, einen Mischer mit einer solchen Komponente und eine Verwendung des Mischers.

Aus der EP-A 0 655 275 ist eine statische Mischvorrichtung für ein fliessendes Medium bekannt, dessen Mischelemente jeweils aus zwei zickzack- oder wellenförmigen Teilstücken zusammengesetzt sind. Ein Teilstück umfasst longitudinale Stege, zwischen denen jeweils ein Durchbruch liegt. Die zwei Teilstücke sind an transversalen Stegen miteinander verbunden. An Scheitelstellen weisen die longitudinalen Stege Verbindungsstücke auf. Die Teilstücke lassen sich durch Stanzen aus Materialbändern herstellen.

Aufgabe der Erfindung ist es, eine Komponente zu einem statischen Mischer zu schaffen, der weitgehend die gleiche Mischwirksamkeit hat wie die genannte Mischvorrichtung, wobei die Komponente dieses Mischers ebenfalls aus einem Materialband, jedoch materialsparender herstellbar sein soll. Diese Aufgabe wird durch die im Anspruch 1 definierte Komponente gelöst.

Die Komponente zu einem statischen Mischer ist durch Schneiden und Umformen oder durch Stanzen aus einem ebenen Materialband hergestellt. Sie erstreckt sich in einer durch das Materialband gegebenen Längsrichtung. Die Komponente weist folgende Gestalt auf:
Quer zur Längsrichtung sind in Abständen transversale Segmente angeordnet, die nach dem Umformen bzw. dem Stanzen in einer Zentralebene der Komponente liegen. Zwischen den transversalen Segmenten liegen Streifenfelder, die einem durch das Schneiden bzw. das Stanzen hergestellten Linienmuster entsprechen und die aus longitudinalen, d.h. in der Längsrichtung sich erstreckenden Streifen bestehen. Die transversalen Breiten der Streifen können variabel sein. Für jeden Streifen sind jeweils bezüglich dem zentralen Bereich des Streifenfelds Halbstreifen unterscheidbar. Durch das Umformen oder das Stanzen sind die Halbstreifen aus der Zentralebene ausgebogen, wobei diese jeweils an Basislinien, die die transversalen Segmente begrenzen, eine Biegekante gegenüber den transversalen Segmenten bilden.

Die abhängigen Ansprüche 2 bis 5 betreffen vorteilhafte Ausführungsformen der erfindungsgemässen Komponente. Statische Mischer mit der erfindungsgemässen Komponente sind jeweils Gegenstand der Ansprüche 6 bis 9. Anspruch 10 bezieht sich auf Verwendungen des statischen Mischers.

Nachfolgend wird die Erfindung anhand der Zeichnungen erläutert. Es zeigen:
- Fig. 1: ein Materialband für eine erfindungsgemässe Komponente, mit transversalen Segmenten und zwischen den Segmenten liegenden Streifenfeldern,
- Fig. 2: das Materialband der Fig. 1 in Schrägbilddarstellung, mit einem Streifenpaar, dessen Halbstreifen aus einer Zentralebene ausgebogen sind,
- Fig. 3: ein Materialband für eine erfindungsgemässe Komponente, dessen Streifenfelder jeweils aus zwei Streifenpaaren bestehen,
- Fig. 4: einen erfindungsgemässen statischen Mischer,
- Fig. 5: eine perspektivische Abbildung einer erfindungsgemässen Komponente mit zwei Streifenpaaren pro Streifenfeld,
- Fig. 6: ein Materialband mit einem durch Schneiden hergestellten Linienmuster, welches durch Umformen in die in Fig. 5 dargestellte Form gebracht werden kann,
- Fig. 7: eine schematische Darstellung einer Mischerstruktur, die aus einer Sequenz von erfindungsgemässen Komponenten zusammengesetzt ist,
- Fig. 8: eine Seitenansicht von einem Mischelement, das aus zwei parallel angeordneten erfindungsgemässen Komponenten zusammengesetzt ist und
- Fig. 9, 10: Streifenfelder zu weiteren Ausführungsbeispielen der erfindungsgemässen Komponente.

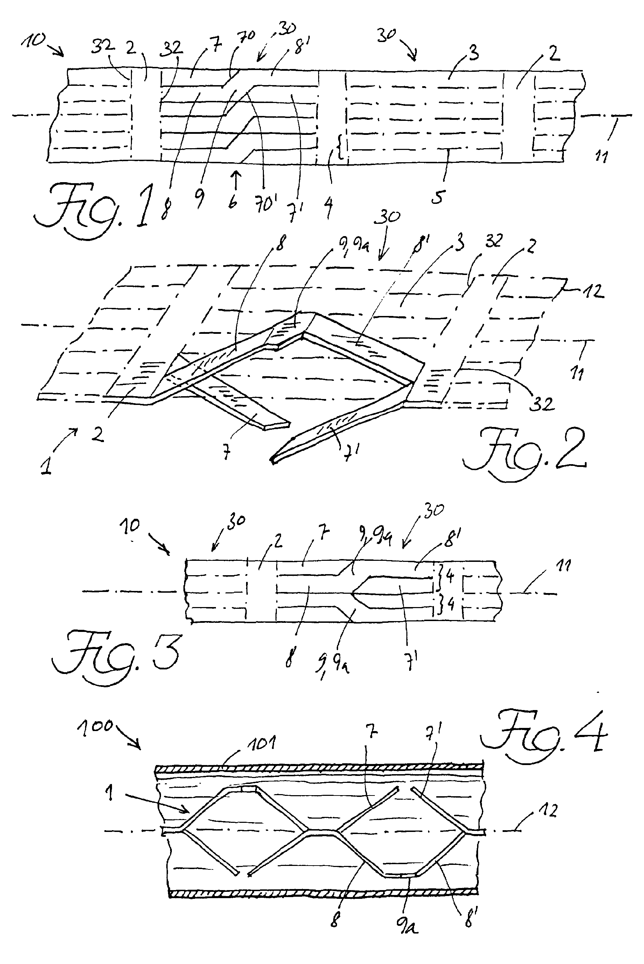

Die erfindungsgemässe Komponente 1 (Fig. 2), die eine Komponente zu einem statischen Mischer 100 (Fig. 4) ist, lässt sich durch Schneiden und Umformen oder Stanzen (d. h. Schneiden und Umformen in einem Arbeitsschritt) aus einem ebenen Materialband 10 (Fig. 1) herstellen. Die Komponente 1 erstreckt sich in einer durch das Materialband 10 gegebenen Längsrichtung 11. Sie weist gemäss den Figuren 1 bis 5 folgende Gestalt auf:

Quer zur Längsrichtung 11 sind in Abständen transversale Segmente 2 angeordnet, die nach dem Umformen in einer Zentralebene 12 (Fig. 2, 4) der Komponente 1 liegen. Bei den dargestellten Ausführungsformen sind die Abstände gleich lang; sie können aber auch unregelmässig sein. Zwischen den transversalen Segmenten 2 liegen Streifenfelder 30, die durch das Schneiden hergestellt sind und die aus longitudinalen, d. h. in der Längsrichtung 11 sich erstreckenden Streifen 3 bestehen. Die Streifen 3 gehen von Basislinien 32 aus, die die transversalen Segmente 2 begrenzen. Jeder Streifen 3 ist Teil eines Streifenpaars 4, das durch eine longitudinale, innere Grenzlinie 5 in zwei Streifen unterteilt wird. Die aus dem Material gebildeten Streifen 3 sind in einem zentralen Bereich 6 des Streifenfelds 30 nicht wirklich sondern nur gedacht zusammenhängend. In jedem Streifen 3 sind bezüglich dem zentralen Bereich 6 zwei Halbstreifen 7, 7' und 8, 8' unterscheidbar, die jeweils versetzt zu einander angeordnet sind. Die zwei Halbstreifen 7, 7' des Streifenpaars weisen im zentralen Bereich 6 jeweils ein freies Ende 70, 70' auf, während die beiden anderen Halbstreifen 8, 8' im zentralen Bereich 6 durch eine Brücke 9 miteinander verbunden sind, welche die innere Grenzlinie 5 überkreuzt.

Durch eine Umformung werden die Halbstreifen 7, 7', 8 und 8' aus der Zentralebene ausgebogen, wobei sie jeweils an den Basislinien 32 eine Biegekante gegenüber den transversalen Segmenten 2 bilden. Die Brücke 9 der zusammenhängenden Halbstreifen 8, 8' bildet in jedem Streifenpaar 4 eine Scheitelstelle 9a. Die zwei anderen Halbstreifen 7, 7' sind bezüglich der Scheitelstelle 9a auf die andere Seite der Zentralebene 12 ausgebogen.

In Fig. 3 ist ein Materialband 10 für eine erfindungsgemässe Komponente 1 abgebildet, dessen Streifenfelder 30 jeweils aus zwei Streifenpaaren 4 bestehen. Es lässt sich eine geometrische Struktur der Komponente 1 herstellen, die bei einer 180°-Drehung um die longitudinale Zentralachse 11 in sich übergeht; wobei insbesondere eine Scheitelstelle 9a wieder auf eine Scheitelstelle 9a zu liegen kommt.

Die Streifenfelder 30 der Komponente 1 können auch jeweils nur aus einem Streifenpaar 4 bestehen. Für diese Ausführungsform ist in Fig. 4 eine Seitenansicht gezeigt, wobei die Komponente 1 in einem Rohr 101 des statischen Mischers 100 angeordnet ist.

Bei den Ausführungsformen der Figuren 1 bis 3 weisen die Streifen 3 eine konstant bleibende transversale Breite auf. Diese Geometrie ergibt eine Komponente 1, die sich besonders für einen rechteckigen Querschnitt des Mischerrohrs 101 eignet. Für einen kreisförmigen Rohrquerschnitt weist das Streifenfeld 30 mit Vorteil eine variable Breite auf: Das Streifenfeld 30 verjüngt sich zur Mitte hin symmetrisch; die Streifen 3 verjüngen sich in entsprechender Weise; und die Kontur des Streifenfelds 30 hat zumindest angenähert die Form zweier Halbellipsen, deren Scheitelpunkte sich im zentralen Bereich 6 berühren. Ein so geformtes Materialband 10, das die in Fig. 5 gezeigte Komponente 1 ergibt, ist in Fig. 6 dargestellt. Es handelt sich dabei um den gleichen Strukturtyp, der bereits in Fig. 3 gezeigt worden ist.

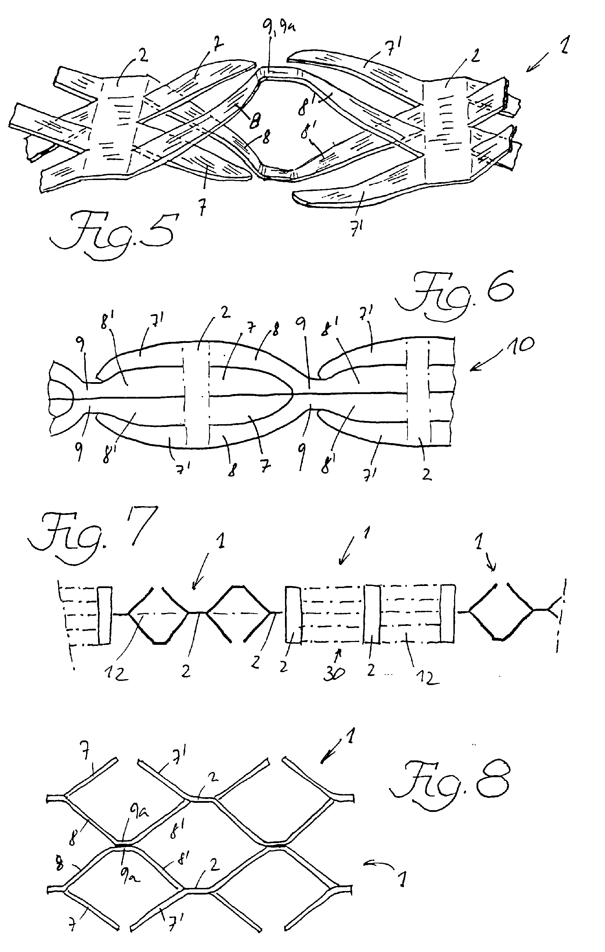

Ein statischer Mischer 100 umfasst in der Regel und mit Vorteil zwei oder mehr Komponenten 1, die eine alternierende Sequenz bilden, wobei zwei benachbarte, hintereinander angeordnete Komponenten Zentralebenen 12 aufweisen, die einander kreuzen. Eine solche Anordnung ist schematisch in Fig. 7 dargestellt. Der Übergang von einer Komponenten 1 zu einer benachbarten kann auch anders gestaltet sein, wenn die eine Komponente 1 folgendermassen modifiziert wird. Das Segment 2 und die Hälfte des Streifenfelds 30 am einen Ende der Komponente 1 wird entfernt (oder besser nicht hergestellt). Dann kann die andere Komponente 1 derart angeordnet werden, dass deren Segment 2 zwischen die am Ende liegenden und ausgebogenen Halbstreifen der modifizierten Komponente 1 zu liegen kommt.

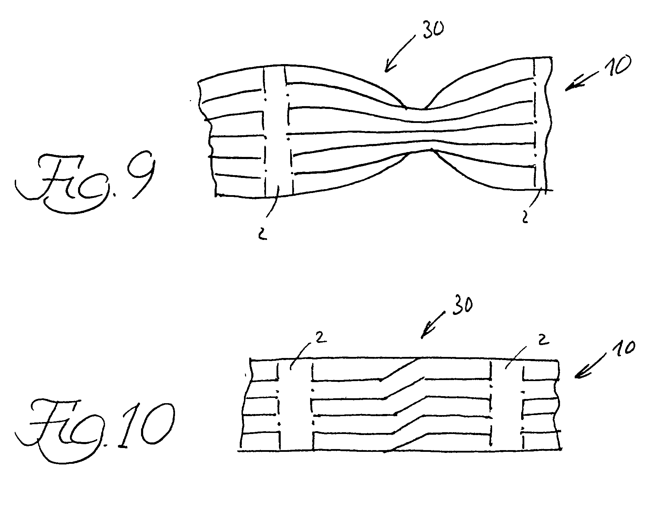

Zwei oder mehr Komponenten 1 mit Querschnitten, die für einen rechteckigen Rohrquerschnitt geeignet sind, können parallel nebeneinander angeordnet sein. Insbesondere können sie an Scheitelstellen 9a miteinander verbunden, beispielsweise verschweisst, sein. Dies illustriert Fig. 8.

Es ist nicht notwendig, dass in der erfindungsgemässen Komponenten 1 zwei versetzt zu einander angeordnete Halbstreifen eines Streifenpaars über eine Brücke mit einander verbunden sind. Zwei miteinander verbundene Halbstreifen können auch dem gleichen Streifen zugehören. Ein Beispiel ist anhand eines Streifenfelds in Fig. 9 dargestellt. Ein weiteres abweichendes Beispiel, bei dem nur am Rand des Streifenfelds Halbstreifen der Art vorliegen, die freie Enden haben, ist in Fig. 10 gezeigt. Ausserdem kann die Anzahl Streifen des Streifenfelds auch ungerade sein: siehe Fig. 10.

Die erfindungsgemässen Komponenten 1, die nicht mit benachbarten Komponenten 1 verbunden sind - d.h. mit Ausnahme der Ausführungsform gemäss Fig. 8 -, eignen sich beispielsweise besonders gut für eine Verarbeitung von Nahrungsmitteln. Verbindungsstellen zwischen benachbarten Teilstücken der Mischelemente sind auch bei der eingangs genannten EP-A 0 655 275 vorhanden. Wenn keine Verbindungsstellen zwischen benachbarten Teilstücken der Mischelemente vorliegen, stellt sich bei einem kontinuierlichen Mischverfahren ein guter Selbstreinigungseffekt ein, was bei diversen Anwendungen aus hygienischen Gründen die Verwendung des erfindungsgemässen Mischers erst möglich macht.

Im Gegensatz zum bekannten Mischelement der EP-A 0 655 275 müssen beim entsprechenden erfindungsgemässen Mischelement keine Durchbrüche mittels Entfernen von Material hergestellt werden. Somit lässt sich - wie gefordert - Material einsparen.

Das Materialband 10 kann aus Metall oder Kunststoff bestehen. Das Schneiden des Linienmusters kann durch Stanzen oder mittels eines Scherschneid- oder Laserverfahrens durchgeführt werden.

## Patentansprüche

1. Komponente (1) zu einem statischen Mischer (100), die durch Schneiden und Umformen oder durch Stanzen aus einem ebenen Materialband (10) hergestellt ist und die sich in einer durch das Materialband gegebenen Längsrichtung (11) erstreckt, welche Komponente folgende Gestalt aufweist:
- quer zur Längsrichtung (11) sind in Abständen transversale Segmente (2) angeordnet, die nach dem Umformen bzw. dem Stanzen in einer Zentralebene (12) der Komponente (1) liegen;
- zwischen den transversalen Segmenten (2) liegen Streifenfelder (30), die einem durch das Schneiden bzw. das Stanzen hergestellten Linienmuster entsprechen und die aus longitudinalen, d.h. in der Längsrichtung sich erstreckenden Streifen (3) bestehen;
- die transversalen Breiten der Streifen können variabel sein;
- für jeden Streifen sind jeweils bezüglich dem zentralen Bereich (6) des Streifenfelds Halbstreifen (7, 8'; 8, 7') unterscheidbar;
- durch das Umformen oder das Stanzen sind die Halbstreifen aus der Zentralebene (12) ausgebogen, wobei diese jeweils an Basislinien (32), die die transversalen Segmente begrenzen, eine Biegekante gegenüber den transversalen Segmenten (2) bilden.

2. Komponente nach Anspruch 1, **dadurch gekennzeichnet,**
- **dass** die Streifen von den Basislinien (32) ausgehen, die Streifen jeweils im zentralen Bereich (6) des Streifenfelds nur gedacht zusammenhängend sind, und mindestens zwei Streifen Teil eines Streifenpaars (4) sind;
- **dass** in jedem Streifenpaar (4) zwei versetzt zu einander angeordnete Halbstreifen (7, 7') im zentralen Bereich (6) jeweils ein freies Ende (70, 70') aufweisen, während die beiden anderen Halbstreifen (8, 8') im zentralen Bereich durch eine Brücke (9) miteinander verbunden sind, die eine longitudinale, innere Grenzlinie (5) überkreuzt;
- und **dass** für jedes Streifenpaar (4) die zusammenhängenden Halbstreifen (8, 8') auf der einen Seite der Zentralebene eine Scheitelstelle (9a) bilden und die zwei anderen Halbstreifen (7,7') auf die andere Seite ausgebogen sind.

3. Komponente nach Anspruch 2, **dadurch gekennzeichnet, dass** jeder Streifen Teil eines Streifenpaars (4) ist, dass insbesondere das Streifenfeld (30) sich aus zwei Streifenpaaren (4) zusammensetzt und dass insbesondere die Gestalt der Komponente zumindest angenähert eine geometrische Form hat, die bei einer 180°-Drehung um eine longitudinale Zentralachse (11) in sich übergeht.

4. Komponente nach einem der Ansprüche 1 bis 3, **dadurch gekennzeichnet, dass** das Streifenfeld (30) sich zur Mitte (6) hin symmetrisch verjüngt, die Streifen (3) sich in entsprechender Weise verjüngen und die Kontur des Streifenfelds zumindest angenähert die Form zweier Halbellipsen hat, deren Scheitelpunkte sich im zentralen Bereich (6) berühren.

5. Komponente nach einem der Ansprüche 1 bis 4, **dadurch gekennzeichnet, dass** das Materialband (10) aus Metall oder Kunststoff besteht, und dass das Schneiden insbesondere durch Stanzen oder mittels einem Scherschneid- oder Laserverfahren durchgeführt worden ist.

6. Statischer Mischer (100) mit einem Rohr (101), in dem mindestens eine Komponente (1) gemäss einem der Ansprüche 1 bis 5 angeordnet ist.

7. Statischer Mischer nach Anspruch 6, **dadurch gekennzeichnet, dass** das Rohr (101) einen kreisförmigen Querschnitt aufweist und die Komponente (1) gemäss Anspruch 4 ausgebildet ist.

8. Statischer Mischer nach Anspruch 6 oder 7, **dadurch gekennzeichnet, dass** zwei oder mehr Komponenten (1) eine alternierende Sequenz bilden, wobei zwei benachbarte, hintereinander angeordnete Komponenten Zentralebenen (12) aufweisen, die einander kreuzen.

9. Statischer Mischer nach Anspruch 6, **dadurch gekennzeichnet, dass** zwei oder mehr Komponenten (1) parallel nebeneinander angeordnet sind und dass die Komponenten insbesondere an Scheitelstellen (9a) miteinander verbunden sind.

10. Verwendung eines statischen Mischers gemäss Anspruch 8 bei einem kontinuierlichen Mischverfahren zur Behandlung von flüssigen Medien, insbesondere flüssigen Nahrungsmitteln oder flüssigen Ausgangsprodukten zu Nahrungsmitteln, wobei sich mit dem Mischverfahren ein guter Selbstreinigungseffekt der Komponenten ergibt.
